## Europäisches Patentamt
## European Patent Office
## Office européen des brevets

(19)

(11) Veröffentlichungsnummer : **0 139 773**
**B1**

(12)

# EUROPÄISCHE PATENTSCHRIFT

(45) Veröffentlichungstag der Patentschrift :
21.01.87

(51) Int. Cl.⁴ : **D 03 D 49/00, F 16 F 15/22**

(21) Anmeldenummer : 83110403.9

(22) Anmeldetag : 19.10.83

(54) Schwingungsisolierende und -dämpfende Lagerung einer Webmaschine.

(43) Veröffentlichungstag der Anmeldung :
08.05.85 Patentblatt 85/19

(45) Bekanntmachung des Hinweises auf die Patenterteilung : 21.01.87 Patentblatt 87/04

(84) Benannte Vertragsstaaten :
CH DE FR GB IT LI

(56) Entgegenhaltungen :
FR-A-  968 283
GB-A-  696 881
US-A- 3 332 646
US-A- 4 179 104

(73) Patentinhaber : GEBRÜDER SULZER AKTIENGESELL-
SCHAFT
Zürcherstrasse 9
CH-8401 Winterthur (CH)

(72) Erfinder : Boileter, Ulrich, Dr.
Gotthelfstrasse 29
CH-8472 Seuzach (CH)
Erfinder : Schaad, Werner
Beckengässchen 24
CH-8200 Schaffhausen (CH)

(74) Vertreter : Dipl.-Ing. H. Marsch Dipl.-Ing. K. Sparing
Dipl.-Phys.Dr. W.H. Röhl Patentanwälte
Rethelstrasse 123
D-4000 Düsseldorf (DE)

## Beschreibung

Die Erfindung betrifft eine schwingungsisolierende und -dämpfende Lagerung einer Webmaschine, die über einzelne kettseitig und warenseitig gelegene Füsse auf dem Boden eines Maschinensaales abgestellt ist, wobei jeder Fuss auf einem Auflageelement gelagert ist.

In Webmaschinen erregte Schwingungen können zu Schäden am Aufstellungsort führen. Es können sich z. B. Risse an und in den Gebäuden bilden ; darüberhinaus können Schwierigkeiten mit der Nachbarschaft auftreten, sofern sich ein Webbetrieb nahe einer Wohnzone befindet, da sich die Schwingungen über das Gebäude auch in der Umgebung ausbreiten können. Hauptursache der Maschinenschwingungen sind die Reaktionskräfte, welche sich bei der Webladenbewegung ergeben ; diese Schwingungen sind daher auch von der Drehzahl der Maschine abhängig.

Bekanntlich schwanken in einer Webmaschine die Massen auf der Seite, auf der der Kettbaum abgestützt ist, beispielsweise zwischen 50 und 1 500 kg, während auf der anderen Seite Schwankungen der Warenbaummassen beispielsweise im Bereich zwischen 20 und 150 kg auftreten. An die Lagerung von Webmaschinen werden daher verschiedene, zum Teil entgegengesetzte Anforderungen gestellt.

Diese Forderungen an die Lagerung sind zum einen, dass die Webmaschine unabhängig vom Betriebszustand eine definierte statische Lage im Raum einnehmen soll ; um diese Lage der Maschine zu erreichen, sollte sie auf einer harten Unterlage ruhen. Um jedoch zum anderen eine Uebertragung der Schwingungsenergie auf das Gebäude zu verhindern, soll die Maschine relativ weich gelagert werden, wodurch die angestrebte definierte Lage zumindest in Frage gestellt wird.

Neben baulichen Massnahmen sind schwingungsisolierende und -dämpfende Vorrichtungen bekannt, bei denen ein Massenausgleich durch Aufstellen zweier Maschinen mit gegenläufigen Ladenbewegungen auf einem gemeinsamen Rahmen angestrebt wird (DE-GM-74 07 252). Bei anderen Aufstellungen werden die Maschinen an Kabeln aufgehängt (US-PS-3 347 277). Beide Massnahmen sind aufwendig und störanfällig ; sie wurden daher bisher in der Praxis nicht angewendet.

Bei einer dritten Art von Massnahmen wird eine Schwingungsdämpfung bzw. -isolation der Maschine gegenüber dem Gebäude und damit der Umgebung erreicht, indem man zwischen Maschine und Gebäudeboden schwingungsdämpfende Elemente einsetzt (DE-AS-15 35 366, US-PS-3 749 340, CH-PS-514 087). Die mit derartigen Elementen bisher erzielten Ergebnisse sind unbefriedigend ; denn eine schwingungsiolierende Aufstellung der Maschine erfordert eine weiche Lagerung. Neben den bereits erwähnten Nivellierungsproblemen besteht bei einer weichen Lagerung die Gefahr, dass — besonders infolge erhöhter Drehzahlen bei Maschinen neuester Bauart — die Erregungskräfte bzw. deren Frequenzen, die hauptsächlich durch die Ladebewegung entstehen, in Resonanz mit den Eigenschwingungen der — als Starrkörper angenommenen — Webmaschine kommen.

Für eine sachgerechte Lagerung der Maschine muss daher gefordert werden, dass die Starrkörper-Eigenfrequenz deutlich unterhalb der ersten Ordnung der von der Ladebewegung verursachten Erregungskräfte bzw. -momente liegt. Die Aufstellung der Maschine muss also mit tiefer Abstimmung erfolgen, d. h. die Eigenfrequenz des Systems Maschine/Auflageelemente muss so gewählt werden, dass die Erregung im Betrieb überkritisch ist. Mit anderen Worten sind die Federkonstanten in Abhängigkeit von der Webmaschinenmasse, der Schwerpunktlage und der Trägheitsmomente dabei so zu wählen, dass die tiefsten Starrkörper-Eigenfrequenzen der Webmaschine wesentlich unter der Betriebsdrehzahl liegen.

Aufgabe der Erfindung ist es, eine Lagerung für eine Webmaschine zu schaffen, bei der die vorstehende Forderung erfüllt ist, ohne dass die eingangs geschilderte, definierte Lage der Maschine verloren geht. Diese Aufgabe wird erfindungsgemäss dadurch gelöst, dass die kettseitigen Auflageelemente Federkonstanten aufweisen, die von denjenigen der warenseitigen Auflageelemente mindestens in vertikaler Richtung um mindestens eine Grössenordnung, d. h. um mindestens das 10-fache, verschieden sind.

Eine harte, vertikale Federung auf der einen — im allgemeinen auf der vom Ladenantrieb entfernteren — Seite der Schäfte gewährleistet, dass die Forderung einer definierten Lage der Maschine eingehalten werden kann, während eine weichere, vertikale Schwingungsisolation auf der anderen Seite die Forderung bezüglich der tiefen Abstimmung erfüllt.

Bei der überwiegenden Anzahl der Webmaschinenkonstruktionen sind die stark variierenden Massen auf dem Kettbaum innerhalb der Maschine abgestützt ; es ist daher vorteilhaft, wenn die harten Auflageelemente mit grosser vertikaler Federkonstante auf der Kettseite angeordnet sind. Weiterhin kann es in diesem Fall zweckmässig sein, wenn die Füsse und Auflageelemente sich unmittelbar unter dem Kettbaumlager befinden, da dann die statische Lage der Maschine praktisch unabhängig von der momentanen Kettbaummasse ist.

Man kann jedoch auch möglicherweise den Kettbaum und/oder den Warenbaum separat aufstellen, um die Maschine von den sich ändernden Massenkräften zu entlasten. Auch in einem solchen Fall ist es zweckmässig, Auflageelemente mit um mindestens eine Grössenordnung verschiedenen vertikalen Federkonstanten einzusetzen, um eine einfache und dauerhafte Nivellierung der Maschine zu erreichen. Wird für die vom Ladenantrieb entferntere Seite die « harte Lagerung » gewählt, so ist es möglich, der « weichen » Schwingungsisolation einen relativ kurzen Hebelarm zum Schwingungserreger, nämlich der Weblade, zuzuordnen.

Vorteilhafterweise betragen die vertikalen Federkonstanten auf der vom Ladenantrieb entferneteren Seite der Schäfte mindestens das 50-fache derjenigen auf der anderen Seite. Die Grösse des « Vervielfachungsfaktors » für die vertikalen Federkonstanten ist dabei von Randbedingungen, wie Art der Fundamente, zulässige maximale Wegamplitude der erzwungenen Maschinenschwingung und dem Betrag der dynamischen, d. h. durch die Schwingungen erzeugten, Fusskräfte, abhängig.

Weiterhin sollte die Lagerung inbezug auf horizontale Schwingungen so weich wie möglich sein ; daher kann es nützlich sein, wenn die Summe der Federkonstanten zur Abstimmung für horizontale Schwingungen höchstens 1/10 der grössten Federkonstanten zur Abstimmung für die vertikalen Schwingungen ist ; dadurch findet eine Entkopplung der Horizontalschwingungen von den Vertikalschwingungen statt.

Als « weiche » Auflageelemente eignen sich besonders Luftfedern ; es ist jedoch auch möglich, dafür handelsübliche volumenkompressible Elastomere, beispielsweise aus Polyurethan, einzusetzen. Andere Möglichkeiten sind kombinierte Dämpferelemente, die Kunststoffdämpfer mit Spiralfedern enthalten, Gummifedern, eine oder mehrere in Serie angeordnete Tellerfedern, vorgespannte Stahlfedern, sowie eine Kombination mehrerer dieser Elemente.

Die Forderungen an die gegebenenfalls stärkeren, statischen Belastungsschwankungen unterworfenen « harten » Auflageelemente sind grosse Federkonstanten in vertikaler und möglichst kleine Federkonstanten in horizontaler Richtung. Als besonders geeignet haben sich hier sogenannte Schichtlager erwiesen, wie sie aus dem Brückenbau bekannt sind. Es handelt sich dabei um zwischen Kunststoffscheiben eingebettete Metallplatten bzw. -bleche. Anzahl der Metallplatten, Dicke und Material (Shore-Härte) der Kunststoff-Zwischenschichten und Form und Grösse des Elementes lassen grosse Variationsbreiten für die Werte der horizontalen und der vertikalen Federkonstanten zu.

Eine besonders vorteilhafte Kombination ergibt sich, wenn auf der « harten » Seite die erwähnten Schichtlager und auf der « weichen » Seite auf dem Markt erhältliche Luftfedern verwendet werden ; denn dadurch fallen Bodenunebenheiten nicht mehr ins Gewicht, da die Abmessungen der « harten » Elemente sehr klein sind, und die Luftfeder unabhängig von örtlich schiefen Böden ist. Weiterhin ermöglicht diese Kombination eine einfache Nivellierung der Maschine, indem die Maschine zuerst auf den harten Elementen abgestellt und dann durch Wahl eines geeigneten Luftdruckes in den Luftfedern der anderen Seite nivelliert wird.

Ausserdem kann im « Normalfall », d. h. bei Maschinen, bei denen Kett- und Warenbaum durch die Maschine abgestützt sind, die Lage der Maschine jederzeit nachgeregelt werden, wenn sich beispielsweise bei stärkeren Aenderungen der warenseitigen Textilgutmassen die die statische Lage der Webmaschine unzulässig verändern sollte. Hierzu ist es lediglich notwendig, den Druck in den Luftfedern zu variieren bzw. automatisch oder manuell zu regeln.

Im folgenden wird die Erfindung anhand eines Ausführungsbeispiels im Zusammenhang mit der Zeichnung näher beschrieben.

Figur 1 ist eine schematische Darstellung einer Seitenansicht auf eine Schmalseite einer Webmaschine ;

Figur 2 gibt in perspektivischer Darstellung einer Ausführungsform eines Schichtlagers wieder.

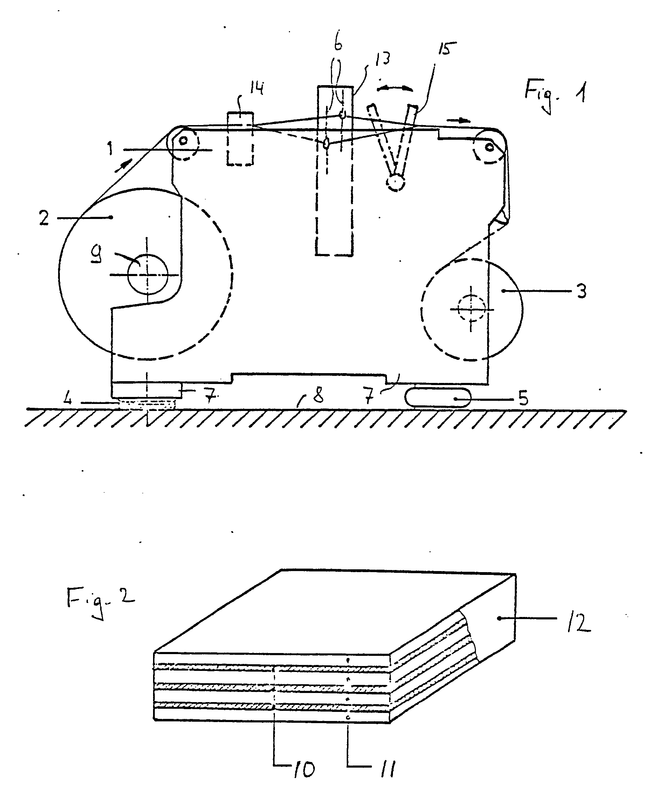

Die Seitenwange 1 (Fig. 1), aus der nach oben — schematisch dargestellt — die Webschäfte 6 mit ihren Führungen 13 sowie Kettfadenwächter 14 und Weblade 15 herausragen, endet nach unten in zwei Füssen 7. Diese sind über Auflageelemente 4 und 5 auf dem Boden 8 abgestellt.

Das Auflageelement 4 auf der Seite des Kettbaumes 2 ist vertikal unter dem Kettbaumlager 9 angeordnet. Als Auflageelement dient auf dieser Seite der Schäfte 6 ein aus der Technik des Brückenbaues bekanntes Schichtlager, dessen Aufbau noch beschrieben wird.

Das Auflageelement 5 auf der Seite des Warenbaumes 3 ist in dem gezeigten Beispiel ein im Handel erhältliches Luftlager, das aus einem elastischen Balg besteht, der mit mehr oder weniger Luft gefüllt ist. Wie bereits erwähnt, ist es durch Variation des Luftdruckes im Luftlager möglich, die Maschine zu nivellieren und die einmal eingestellte Lage — auch bei stark ändernden Massen auf der Warenseite — beizubehalten.

Ein Schichtlager (Fig. 2) besteht aus einem oder mehreren Metallblechen 10, beispielsweise aus Stahlblech, auf die Kunststoffschichten 11 aus ölbeständigem Kunststoff, beispielsweise aus Chloropren-Kautschuk, aufvulkanisiert sind. Die Oelbeständigkeit ist erforderlich, weil vom Betrieb der Maschine her immer Oeltröpfchen auf die Schichtlager gelangen können. Darüberhinaus ist das ganze Element 4 vollständig von einer Kunststoffschicht 12, ebenfalls aus Chloropren-Kautschuk, umhüllt, um die Stahlbleche 11 vor Korrosion zu schützen.

Bei einer bereits ausgeführten Lagerung einer Webmaschine sind kettseitig Auflageelemente 4 mit vertikalen Federkonstanten $k_v$ etwa $21 \times 10^6$ N/m verwendet worden ; die zugehörigen Werte für die horizontalen Federkonstanten $k_h$ betragen etwa $0,5 \times 10^6$ N/m.

Als Auflageelemente 5 sind bei dieser Maschine im Handel erhältliche Luftfedern eingesetzt worden, bei denen die Werte der erreichten Federkonstanten eines Elementes $k_v$ etwa $0,35 \times 10^6$ N/m ; $k_h$ etwa $0,88 \times 10^5$ N/m lauten.

Gemäss der Erfindung ist also die vertikale Federkonstante $k_v$ des Elementes 4 mindestens eine Grössenordnung grösser als diejenige des Elementes 5.

## Patentansprüche

1. Schwingungsisolierende und -dämpfende Lagerung einer Webmaschine, die über einzelne kettseitig und warenseitig gelegene Füsse auf dem Boden eines Maschinensaales abgestellt ist, wobei jeder Fuss auf einem Auflageelement gelagert ist, dadurch gekennzeichnet, dass die kettseitigen Auflageelemente (4) Federkonstanten aufweisen, die von denjenigen der warenseitigen Auflageelemente (5) mindestens in vertikaler Richtung um mindestens eine Grössenordnung verschieden sind.

2. Lagerung nach Anspruch 1, dadurch gekennzeichnet, dass die vertikalen Federkonstanten auf der vom Ladenantrieb entfernteren Seite der Schäfte (6) mindestens das 50-fache derjenigen auf der anderen Seite betragen.

3. Lagerung nach Anspruch 1, dadurch gekennzeichnet, dass die Summe der Federkonstanten zur Abstimmung für horizontale Schwingungen höchstens 1/10 der grössten Federkonstanten zur Abstimmung für die vertikalen Schwingungen ist.

4. Lagerung nach einem der Ansprüche 1 bis 3, dadurch gekennzeichnet, dass die harten Auflageelemente (4) mit grosser vertikaler Federkonstante auf der Kettseite angeordnet sind.

5. Lagerung nach Anspruch 4, dadurch gekennzeichnet, dass die Füsse und die Auflageelemente (4) auf der Kettseite sich vertikal unter dem Kettbaumlager (9) befinden.

6. Lagerung nach einem der Ansprüche 1 bis 5, dadurch gekennzeichnet, dass die Auflageelemente (4) auf der vom Ladenantrieb entfernteren Seite der Schäfte (6) als Schichtlager aufgebaut sind.

7. Lagerung nach einem der Ansprüche 1 bis 6, dadurch gekennzeichnet, dass die Auflageelemente (5) auf der dem Ladenantrieb näheren Seite der Schäfte (6) aus Luftfedern bestehen.

## Claims

1. A vibration-insulating and vibration-damping mounting of a weaving machine borne on the floor of a machine shed by way of individual feet disposed on the warp side and on the cloth side of the machine, each foot being mounted on a support or bearing element, characterised in that the warp-side support elements (4) have spring rates which differ at least vertically from those of the cloth-side support elements (5) by at least one order of magnitude.

2. A mounting according to claim 1, characterised in that the vertical spring rates on that side of the shafts (6) which is further away from the sley drive are at least 50 times those on the other side.

3. A mounting according to claim 1, characterised in that the sum of the spring rates for tuning for horizontal vibrations is at most 10 % of the greatest spring rates for tuning for vertical oscillations.

4. A mounting according to any of claims 1-3, characterised in that the hard support elements (4) having a substantial vertical spring rate are disposed on the warp side.

5. A mounting according to claim 4, characterised in that the feet and the support elements (4) on the warp side are disposed vertically below the warp beam bearing (9).

6. A mounting according to any of claims 1-5, characterised in that the support elements (4) on that side of the shafts (6) which is further away from the sley drive are laminated bearings.

7. A mounting according to any of claims 1-6, characterised in that the support elements (5) on that side of the shafts (6) which is nearer the sley drive are air springs.

## Revendications

1. Système de montage isolant et amortissant les vibrations d'un métier à tisser qui est implanté sur le sol d'une salle des machines par l'intermédiaire de pieds individuels situés côté chaîne et côté tissu, chaque pied étant monté sur un élément d'appui, caractérisé par le fait que les éléments d'appui (4) situés côté chaîne présentent des constantes élastiques différant au moins dans le sens vertical, d'au moins un ordre de grandeur, de celles des éléments d'appui (5) situés côté tissu.

2. Système de montage selon la revendication 1, caractérisé par le fait que les constantes élastiques verticales représentent, du côté des cadres (6) éloigné de l'entraînement du battant, au moins 50 fois celles de l'autre côté.

3. Système de montage selon la revendication 1, caractérisé par le fait que la somme des constantes élastiques, en vue de l'harmonisation pour des vibrations horizontales, représente au plus 1/10 des constantes élastiques maximales en vue de l'harmonisation pour les vibrations verticales.

4. Système de montage selon l'une des revendications 1 à 3, caractérisé par le fait que les éléments d'appui durs (4) sont disposés côté chaîne, avec une grande constante élastique verticale.

5. Système de montage selon la revendication 4, caractérisé par le fait que les pieds et les éléments d'appui (4) se trouvent, côté chaîne, verticalement au-dessous du palier (9) d'ensouple.

6. Système de montage selon l'une des revendications 1 à 5, caractérisé par le fait que les éléments d'appui (4) sont réalisés comme des supports stratifiés du côté des cadres (6) le plus éloigné de l'entraînement du battant.

7. Système de montage selon l'une des revendications 1 à 6, caractérisé par le fait que les éléments d'appui (5) consistent en des ressorts pneumatiques du côté des cadres (6) le plus rapproché de l'entraînement du battant.

Fig. 1

Fig. 2